# EUROPÄISCHE PATENTSCHRIFT

(11) **EP 2 403 666 B1**
(45) Veröffentlichungstag und Bekanntmachung des Hinweises auf die Patenterteilung: **02.01.2019**
(21) Anmeldenummer: 10706949.4
(22) Anmeldetag: 02.03.2010
(51) Int. Cl.: B22D 11/00, B22D 11/124, B22D 11/22, F01K 23/02, F22B 1/02

(54) **VERFAHREN UND VORRICHTUNG ZUR RÜCKGEWINNUNG VON ENERGIE IN EINER ANLAGE ZUR HERSTELLUNG EINES METALLISCHEN GUTS**
METHOD AND DEVICE FOR RECOVERING ENERGY IN A SYSTEM FOR PRODUCING A METAL ARTICLE
PROCÉDÉ ET DISPOSITIF DE RÉCUPÉRATION D'ÉNERGIE DANS UNE INSTALLATION DE PRODUCTION D'UN PRODUIT MÉTALLIQUE

(30) Priorität: 02.03.2009 DE 102009011073; 07.04.2009 DE 102009016384; 27.04.2009 DE 102009018734; 28.04.2009 DE 102009018899; 02.07.2009 DE 102009031557
(43) Veröffentlichungstag der Anmeldung: 11.01.2012
(73) Patentinhaber: SMS group GmbH, 40237 Düsseldorf (DE)
(72) Erfinder: SEIDEL, Jürgen, 57223 Kreuztal (DE); STAVENOW, Axel, 40625 Düsseldorf (DE); SUDAU, Peter, 57271 Hilchenbach (DE)
(74) Vertreter: Klüppel, Walter
(86) Internationale Anmeldenummer: PCT/EP2010/001283
(87) Internationale Veröffentlichungsnummer: WO 2010/099931

(56) Entgegenhaltungen:
- EP-A1- 0 840 053
- CN-A- 101 260 816
- DE-B3- 10 357 419
- DE-B3-102004 055 598
- GB-A- 2 441 657
- JP-A- 55 035 808
- JP-A- 56 041 056
- JP-A- 57 079 043
- JP-A- 57 130 752
- JP-A- 57 187 151
- JP-A- 58 138 545
- JP-A- 2004 069 163
- US-A- 4 253 314
- US-A- 4 774 997

## Beschreibung

Die Erfindung betrifft ein Verfahren zur Rückgewinnung von Energie in einer Anlage zur Herstellung eines metallischen Guts, wobei die Anlage eine Stranggießanlage umfasst, wobei im Bereich der Stranggießanlage Wärme mittels mindestens eines Wärmetauschers von dem metallischen Gut und/oder von einem Element der Stranggießanlage in ein Wärmetransport- und/oder Arbeitsmedium überführt wird, wobei die in dem Wärmetransport- und/oder Arbeitsmedium enthaltene Wärmeenergie bzw. Dampfdruck in einer Dampfkraftmaschine, insbesondere in einer Dampfturbine, mit verbundenem Generator zur Stromerzeugung und/oder zur anderweitigen Nutzung herangezogen wird, wobei die Stranggießanlage eine Anzahl Stranggießrollen aufweist, wobei der mindestens eine Wärmetauscher zwischen zwei Stranggießrollen angeordnet ist oder mindestens eine Stranggießrolle als Wärmetauscher ausgebildet ist und dem Gießstrang Wärme entzieht oder der mindestens eine Wärmetauscher in unmittelbarer Nähe des Gießstrangs, insbesondere neben dem Gießstrang, angeordnet ist und von diesem Wärme aufnimmt.

Bei der Stahlherstellung wird dem Stahl bei der Abkühlung von ca. 1.570 °C (flüssiger Zustand) auf eine mittlere Temperatur von ca. 1.200 °C beim Auslauf aus der Stranggießanlage ca. 145 kWh/t Wärmeenergie entzogen. Diese Wärme geht zumeist ungenutzt an die Umgebung (Luft und Kühlwasser) verloren.

Ein gattungsgemäße Verfahren wird in der US 4 253 314 A**,** in der JP 57 130752 A1**,** in der JP 57 187151 A**,** in der JP 58 138545 A**,** in der CN 101 260 816 A**,** in der JP 57 079043 A**,** in der JP 56 041056 A und in der US 4 774 997 A beschrieben. Ähnliche bzw. modifizierte Lösungen zeigen die GB 2 441 657 A**,** die DE 10 2004 055 598 B3**,** die EP 0 840 053 A1**,** die JP 55 035808 A**,** die JP 2004 069163 A und die DE 103 57 419 B3**.**

Aus dem Bereich der Stahlerzeugung ist aus der WO 2008/075870 A1 bekannt, die bei der Herstellung von flüssigem Eisen durch Reduktion in einem Wirbelbettreaktor anfallende Abwärme zur Hochdruckdampferzeugung abzuführen, durch den dann beispielsweise eine Dampfturbine zur Stromerzeugung betrieben wird.

In der EP 0 044 957 B1 wird eine Anlage zur Rückführung der latenten und fühlbaren Wärme von Abgasen aus einem Kupolofen für die Gusseisenerzeugung oder einer ähnlichen Schmelzeinrichtung beschrieben, zum Zweck des Gewinnens von elektrischer und/oder thermischer Energie in Form von Dampf und/oder warmem Wasser. Die Anlage besteht aus einer Wärmeeinheit mit einem Brenner und zwei mit den Rauchgasen durchströmten Abhitzekesseln sowie bei der Erzeugung von elektrischer Energie zusätzlich einer mit Dampf aus einem Überhitzer gespeisten Turbine und einem Wechselstromgenerator.

Aus der DE 2 622 722 C3 ist eine Vorrichtung zur Abkühlung von heißen Stahlbrammen im Anschluss an den letzten Walzvorgang bekannt, in der die Stahlbrammen zwischen in parallelen Reihen angeordneten senkrechten Haltesäulen hochkant gestellt werden. Die von den Stahlbrammen abgestrahlte Wärme wird von zwischen den Haltesäulen angeordneten Kühlwänden mit Kühlwasserdurchströmten Rohrbündeln aufgenommen und zur Dampferzeugung genutzt. Hier ist ein aufwendiges Brammenhandling notwendig. Durch die ständige Veränderung der Brammentemperatur sowie dem diskontinuierlichen Betrieb variiert die erzeugte Dampfmenge, was sich nachteilig am Dampfverbraucher auswirkt.

Die EP 0 027 787 B1 beschreibt eine Anlage zur Gewinnung der fühlbaren Wärme von im Stranggießverfahren gegossenen Brammen in einer Kühlkammer mittels Luft, die mit einem Gebläse in direkten Kontakt mit den Brammenoberflächen gebracht wird. Die auf diese Weise erwärmte Luft dient dann außerhalb der Kühlkammer als Heizmedium, insbesondere für ein in einem thermodynamischen Kreisprozess geführtes Kreislaufmedium. Auch hier ist das Brammenhandling sehr aufwendig und durch das Öffnen und Schließen der Schleusentore ist eine diskontinuierliche bzw. variierende Wärmezufuhr zum Wärmetauscher nicht zu vermeiden. Wird in der Brammenkammer Wasser verdampft, so lässt sich infolge des Brammenhandlings in dem Lagerraum kaum Dampfdruck aufbauen. Hierdurch entstehen nur relativ geringe Dampftemperaturen am Wärmetauscher des Wärmeverbrauchers.

Des Weiteren wird in DE 30 19 714 A1 eine Anlage zur Rückgewinnung von Wärme aus heißen Stahlbrammen beim Transport auf dem Rollgang vorgestellt. Hierzu sind zwischen den Rollgangsrollen und über dem Rollgang Kühlwasser durchströmte Rohre angebracht in denen durch Erhitzung von Wasser Dampf erzeugt wird. Durch diese Konstruktion kann in den Rohrleitungen ein höherer Dampfdruck und damit eine höhere Dampftemperatur erzeugt werden. Aus Gründen der Sicherheit muss dieser Brammentransportbereich abgeschottet bzw. abgedeckt werden, um beim Bersten eines Rohres die Umgebung nicht zu gefährden. Wegen der hohen Rollentemperaturen müssen besondere Maßnahmen an den Rollgangsrollen getroffen werden, wie z. B. eine besondere Rollenlagerung oder eine Rollenkühlung. Brammen werden in der Regel hinter der Stranggießanlage geschnitten und möglichst schnell in Stapeln gelagert. Dies gilt besonders bei höherwertigen Brammenmaterialien, die kantenrissanfällig sind. Es ergibt sich so durch den Brammentransport ein diskontinuierlicher Heizprozess.

Der Erfindung liegt im Lichte dieser vorbekannten Konzepte die Aufgabe zugrunde, ein Verfahren und eine Anlage zur Energierückgewinnung der Kühlwärme einer Stranggießanlage vorzuschlagen, mit der in verbesserter Weise eine Umwandlung in elektrischer Energie oder eine Nutzung der Prozesswärme bei anderen Wärme- oder Dampfverbrauchern möglich ist.

Die Lösung dieser Aufgabe durch die Erfindung ist dadurch gekennzeichnet, dass das Wärmetransport- und/oder Arbeitsmedium, insbesondere das Wasser oder der Dampf, nach dem Wärmetauscher und vor seiner Verwendung weiter erwärmt wird, insbesondere in einem Überhitzer, in einem Dampfnachheizbrenner, in einem Flamm- oder Rauchkessel oder in einem weiteren Wärmetauscher, wobei eine weitere Erwärmung des Wärmetransport- und/oder Arbeitsmediums durch eine Thermoölheizung erfolgt und wobei das Thermoöl mittels Brennstoffen erwärmt wird, die Abfallprodukte des Stahlerzeugungsprozesses sind.

Die Stranggießanlage hat dabei eine Anzahl Stranggießrollen, wobei der mindestens eine Wärmetauscher zwischen zwei Stranggießrollen angeordnet ist. Möglich ist es aber auch, dass der mindestens eine Wärmetauscher in unmittelbarer Nähe des Gießstrangs, insbesondere neben dem Gießstrang, angeordnet ist und von diesem Wärme aufnimmt. Vorgesehen werden kann auch, dass die Strangrollen bzw. die Strangrollenkühlung als Wärmetauscher genutzt werden.

Weitere Fortbildungen sind in den Unteransprüchen angegeben.

Gemäß der Erfindung wird dem Gießstrang also während des Gießens in Wärmetauschern zwischen den Strangrollen und/oder neben dem Gießstrang und/oder von Strangrollen, die als Wärmetauscher ausgebildet sind, Wärme entzogen, wobei in diesem Transportzeitraum dem Gießstrang ein großer Teil der Wärme über die Wärmetauscher in Wasser überführt wird und dieses aufheizt, welches dann verdampft und zur Stromerzeugung und/oder zur direkten Nutzung der Prozesswärme oder/und des Dampfes bei anderen Wärme- oder/und Dampfverbrauchern abgeführt wird.

Dem Strang wird also während des Gießens bereits Wärme entzogen und diese Wärme in verschieden gestalteten Wärmetauschern zwischen den Strangrollen abgeführt. Hierzu wird Wasser durch die Rohrleitungen oder Bohrungen der Wärmetauscher gepumpt, welches sich aufheizt und verdampft. Die Wasser bzw. Dampfleitungen können einen Wärmetauscher gerade oder schlangenförmig durchlaufen. Durch die Art der Wasserzuführung für den jeweiligen Wärmetauscher, und zwar im Wechsel von links nach rechts und umgekehrt, ist eine symmetrische Abkühlung des Strangs über der Breite gewährleistet.

Die Wärmetauscher zwischen den Segmentrollen können als Plattenwärmtauscher mit Bohrungen oder Kammern, Rohr-Steg-Rohr-Verbindungen oder Rohrbündelwärmetaucher oder ähnlich ausgebildet sein. Auch neben dem Gießstrang sind Wärmetauscher obiger Art angeordnet, um nicht nur nach oben oder unten sondern auch seitlich, die abgestrahlte Wärme aufzufangen. Vorzugsweise sind die Wärmetauscher auf der dem Strang abgewandten Seite wärmeisoliert.

Weiterhin können die Segment- bzw. Strangrollen als Wärmetauscher genutzt werden. Hierzu ist die Strangrolle mit einer Rolleninnenkühlung ausgestattet. Diese kann verschiedene Ausführungsformen mit Revolver-Kühlbohrungen, zentraler Kühlbohrung oder Mantelringspaltkühlung haben. Über einseitig oder beidseitig angeordneten Hochdruck-Mediendrehzuführungen wird das Wasser bzw. der Dampf von den Segmentrollen in das Leitungssystem übertragen. Hinter der dem Gießstrang abgewandten Seite der Strangrolle sind vorzugsweise Wärmedämmungen vorgesehen.

Die einzelnen Wärmetauscher können parallel oder in Reihe geschaltet miteinander verbunden sein. Der Wärmetauscher, der die geringste Energiezufuhr erfährt, wird zuerst mit Wasser durchströmt.

Um die Temperaturführung des Strangs flexibel abhängig vom Strangmaterial beeinflussen zu können, sind im Bereich der Wärmetauscher Strangaußenkühlungen z. B. in Form einer Sprühkühlung vorgesehen. Diese Kühleinrichtungen können bei Bedarf optional zugeschaltet werden. Bevorzugt wird jedoch der Strang trocken gekühlt. Auch die Strangrollenkühlung sollte bevorzugt als Rolleninnenkühlung ausgeführt sein. Durch diese Maßnahmen wird die Energieabgabe an die Wärmetauscher maximiert.

Damit sich die Segmente relativ zueinander bewegen können, bei z. B. Einstellung der Strangdicke, sind die Rohrleitungen zwischen der festen und beweglichen Seite der Anschlüsse flexibel durch Hochdruck-Heißdampfschläuche oder Edelstahl-Ringwellenschläuche oder/und druckfeste Rohrgelenke miteinander verbunden. Weiterhin sind schnell lösbare Schlauch bzw. Rohrkupplungen vorgesehen, um ein einfaches Entkoppeln der Wasser- bzw. Dampfleitung, beispielsweise beim Wechseln der Strangsegmente, zu ermöglichen.

Durch Sicherheitsventile in der Nähe der Wärmetauscher oder/und Berstscheiben kann ein überhöhter Druckanstieg vermieden und die Sicherheit der Anlage gewährleistet werden.

Die gewünschte Wassermenge und damit die Temperatur und der Druck wird in Abhängigkeit der Strangtemperatur, Gießstranggeometrie (z. B. der Breite des Gießstrangs) sowie abhängig von der Größe und der Bauart der Wärmetauscher etc. über wärmeisolierte Transportleitungen mit regelbaren Speisewasserpumpen und/oder Misch- und Regelventilen eingestellt. Mit Veränderung der Durchflussmenge oder/und Druckregelventile wird die Temperatur des Wassers bzw. erzeugten Dampfes geregelt. Ziel ist es, eine möglichst hohe Dampftemperatur und -menge bei noch zulässigem Dampfdruckniveau einzustellen.

Ein Prozessmodell überwacht und steuert den Abkühlprozess des Strangs sowie die Wassermenge, die Wasser- und Dampftemperatur und das Druckniveau für die Dampferzeugung. Hierzu sind Durchfluss-, Druck- und Temperaturmessfühler in dem Bereich der Wärmetauscher sowie in der weiterführenden Anlage angebracht.

Der Dampf kann für jeden Wärmetauscher einzeln oder auch gruppenweise zusammengefasst in Richtung Dampfverteiler bzw. Sammelbehälter, Druckspeicher und weiter zum Dampfverbraucher geleitet werden.

Als Dampf- oder Wärmeverbraucher bieten sich neben der Einspeisung in ein Dampfnetz insbesondere verschiedene andere Möglichkeiten an:
Bevorzug kann der Dampf direkt mit oder ohne Zusatzheizung an eine Dampfturbine oder einen Dampfschraubenmotor zwecks Stromerzeugung weitergeleitet werden. Alternativ kann die Wärmeabgabe auch indirekt an einem Wärmetauscher erfolgen, der als Wärmequelle für einen thermodynamischen Kreisprozess dient, wie eine konventionelle Dampfturbine, ein Dampfschraubenmotor, eine ORC-Anlage oder eine Kalina-Anlage, die zur Stromerzeugung dienen.

Auch eine Speicherung der Wärme in transportablen oder ortsfesten Wärmespeichern ist möglich.

Liegen andere Dampf- oder Wärmeverbraucher in der örtlichen Nähe, wie beispielsweise eine Beiz- oder andere Bandweiterverarbeitungsanlagen, ein Stahlwerk, etc., so kann ein Teil der gewonnenen Strangprozesswärme bzw. Wasserdampf alternativ über eine Transportleitung zu diesen Wärme- oder Dampfverbrauchern transportiert werden. In effizienter Weise wird dann dort die elektrische Energie eingespart.

Analog lässt sich die Strangwärme oder der daraus gewonnene Dampf für benachbarte Anlagen oder Prozesse (außerhalb der Metall verarbeitenden Anlage) sinnvoll und vorteilhaft nutzen und den Gesamtwirkungsgrad der Prozesswärmerückgewinnung steigern, wobei als bevorzugte Anwendungen zu nennen sind: Meerwasserentsalzungsanlagen, chemische Prozesse, Betreiben von Dampfpumpen, Trocknungsprozesse, Wasseraufbereitungsanlagen und Fernwärme-Gebäudeheizungen. Hierbei kann die Prozesswärme direkt oder die Kondensator-Kühlwärme der Stromerzeugungsanlage eingesetzt werden. Abhängig vom gewünschten Temperaturniveau wird dabei als Wärmetransport- und/oder Arbeitsmedium Thermoöl, Luft, Wasser oder Dampf verwendet.

Bevor der Dampf an die Dampfverbraucher abgegeben wird, ist vorteilhafterweise vorgesehen, das Temperaturniveau des Dampfes weiter anzuheben. Dies kann mit Hilfe von Überhitzern, Dampfnachheizbrennern, in Flamm- oder Rauchkessel oder durch einfache Wärmetauscher geschehen. Über eine Wärmetransportleitung wird hier mit einem heißen Wärmeübertragungsmedium, wie beispielsweise Luft, Rauchgas, Thermoöl oder Salzschmelzen, von einer anderen Wärmequelle Wärme übertragen, die eine höhere Temperatur hat, als der nachzuwärmende Dampf. Als bevorzugte Wärmequellen können Wärmetauscher im Bereich des Brammen- oder Coillagers, eines Transportrollgangs, eines Teilbereichs einer Stranggießanlage oder Ofenabgase etc. dienen.

Soll eine elektrische Versorgungssicherheit für die angeschlossenen Elektroverbraucher sichergestellt werden, so ist an der Stromerzeugungsanlage ein Wärmespeicher angeschlossen, der kurzzeitige Wärmeunterbrechungen überbrückt. Weiterhin ist optional vorgesehen, einen Thermoölerhitzer zu installieren, der als Standby-Zusatzheizung dient. Der Thermoölerhitzer kann mit Gas (besonders vorteilhaft Hochofengas, Konvertergas, Koksgas oder Erdgas) oder Öl betrieben werden und wird nur beim Ausbleiben der Strangwärme aktiviert. Sollte beispielsweise Hochofengas übrig sein, so könnte das in einer Gesamtanlagen-Energiestrategie oder eigenständigen Strategie eingebunden werden.

Die beschriebene Technologie ist nicht nur auf Dick- oder Dünnbrammen-Gießmaschinen beschränkt, sondern kann auch in gleicher Weise bei der Block-, Knüppel-, Träger- oder Rundstahlerzeugung etc. angewendet werden. Auch bei Nichteisenanlagen kann diese Technologie vorteilhaft sein.

Die erfindungsgemäß vorgeschlagene Nutzung der Stranggießanlage als Wärmerückgewinnungsanlage ist aus folgenden Gründen besonders vorteilhaft:
Die Energiedichte ist in einer Stranggießanlage besonders hoch; dasselbe gilt für die Strangtemperatur beim Gießen. Durch die hohe Energiedichte in der Stranggießanlage ist es besonders vorteilhaft, die Wärmetauscher zwischen den Strangrollen und/oder neben dem Gießstrang und/oder als Wärmetauscher ausgebildete Strangrollen mit Wasser durchlaufen zu lassen und so Wasserdampf zu erzeugen.

Der Prozess läuft kontinuierlich und sehr lange stabil.

Die Stranggießanlage (Rollen, Lager, etc.) ist bereits auf die lange Produktionszeit bei hoher Temperaturbelastung eingestellt.

Die Stranggießanlage ist während des Betriebs nach außen hin ohnehin abgeschottet, so dass eine Gefährdung durch die Wärmerückgewinnungseinrichtungen vermieden wird.

In den Zeichnungen ist ein Ausführungsbeispiel der Erfindung dargestellt. Es zeigen:
- Fig. 1: in der Seitenansicht eine Stranggießanlage, die mit einer Dampferzeugungsanlage kombiniert ist,
- Fig. 2: in der Seitenansicht Wärmetauscher zwischen den Segmentrollen der Stranggießanlage und neben dem Gießstrang und
- Fig. 3: in der Vorderansicht Wärmetauscher zwischen den Segmentrollen und neben dem Gießstrang mit Zuleitungen.

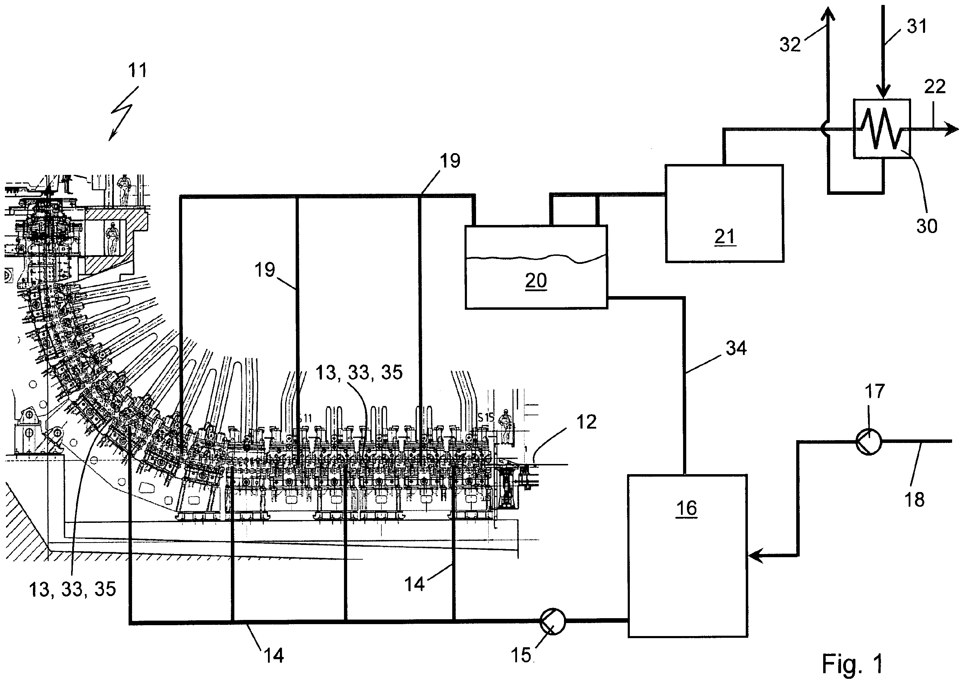

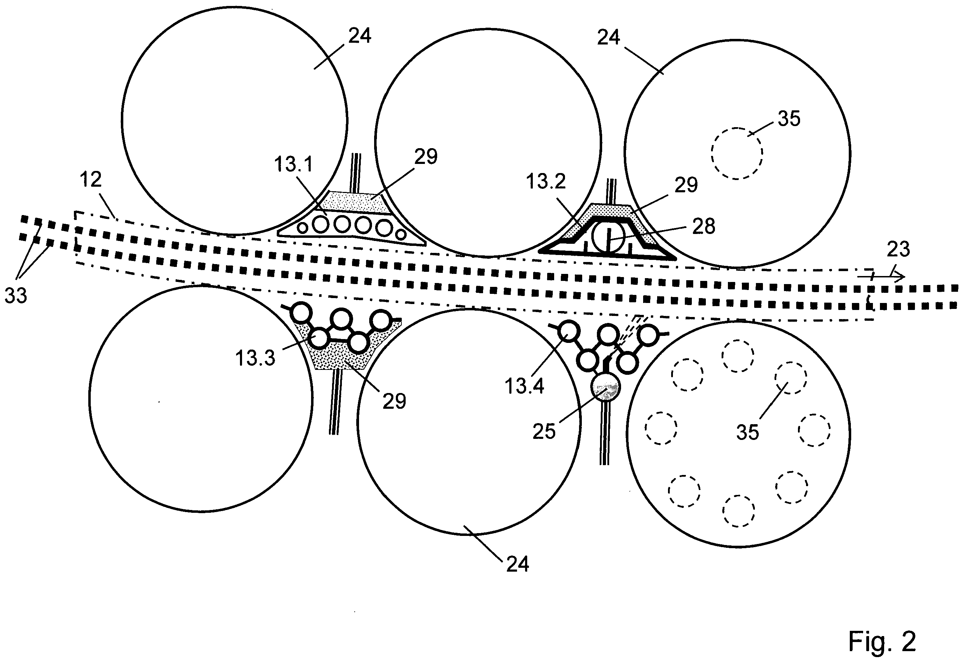

In Figur 1 sind eine Stranggießanlage 11 in der Seitenansicht und schematisch Teile einer Einrichtung zur Wasserdampferzeugung dargestellt. Dem Gießstrang 12 wird während des Gießens Wärme entzogen und diese Wärme an Wärmetauscher 13 zwischen den Strangrollen 24 (s. Fig. 2) und Wärmetauscher 33 neben dem Gießstrang 12 sowie an die als Wärmetauscher ausgebildete Strangrollen 24 abgeführt. Die Wärmetauscher 13, 33, 24 sind in Figur 1 nur andeutungsweise dargestellt.

Das in die Bohrungen oder Rohrleitungen der Wärmetauscher 13, 33, 24 gepumpte Wasser heizt sich auf und verdampft. Dieser Nassdampf bzw. Sattdampf gelangt danach über wärmeisolierte Rohrleitungen 19 in eine Dampfverteilerleitung bzw. einen Sammelbehälter 20. Warmes überschüssiges Kondenswasser kann über eine Kondenswasserleitung 34 zum Speisewasserbehälter 16 zurückgeführt werden. Der Weitertransport erfolgt in dem dargestellten Ausführungsbeispiel über einen Druckspeicher 21. Auch die Speicher und Behälter sind vorzugsweise wärmeisoliert. Im Sammelbehälter 20 und/oder - wie dargestellt - im weiteren Verlauf der Dampfleitung in Richtung Dampfverbraucher ist eine Möglichkeit der Dampfnachheizung in dem Wärmetauscher 30 vorgesehen.

Die Wärme aus anderen Wärmequellen wird hier über die Zulaufleitung 31 zum Wärmetauscher 30 und wieder zurück über die Rücklaufleitung 32 geführt. Als Wärmeübertragungsmedium in den wärmeisolierten Zu- und Rücklaufleitungen 31, 32 wird vorzugsweise Luft, Rauchgas, Thermoöl oder eine Salzschmelze verwendet. Die Temperatur des Wärmeübertragungsmediums ist höher als die Dampftemperatur, so dass eine Nachheizung bzw. weitere Überhitzung des Dampfes erfolgt. Möglich ist auch eine direkte Erhitzung mit Brennern, z. B. in Flamm- oder Rauchkesseln.

Der so auf eine Zieltemperatur erwärmte Dampf gelangt danach über eine wärmeisolierte Leitung 22 zum Dampfverbraucher. Als Dampf- oder Wärmeverbraucher bieten sich neben der Einspeisung in ein Dampfnetz eine Dampfturbine oder ein Dampfschraubenmotor zwecks Stromerzeugung an. Die Dampfabgabe kann direkt oder indirekt als Wärmeabgabe über einen Wärmetauscher erfolgen, der als Wärmequelle für einen thermodynamischen Kreisprozess dient. Weiterhin ist auch eine Dampf- oder Wärmeabgabe (auch über eine getrennte Wärmetransportleitung, gefüllt beispielsweise mit Thermoöl) an andere Verbraucher im Bereich der Metallverarbeitung oder benachbarte Prozesse vorgesehen.

Bei der Wärmeabgabe an den Wärmeverbrauchern kondensiert der Dampf wieder zu Kondenswasser und wird bevorzugt zusammen mit zugegebenen Füllwasser über die Leitung 18 mit der Förderpumpe 17 zum Speisewasserbehälter 16 zurückgepumpt. Die Speisewasserpumpe 15 versorgt dann über die Wasserleitungen 14 die Wärmetauscher 13, 33 wieder mit frischem Wasser, so dass der Medienkreis geschlossen ist.

Entgaser, Kondensatoren, Details zum Wärmeverbraucher, Ventile etc. sind in Fig. 1 nicht näher dargestellt. Vereinfacht wurde auch nur ein Druckkreis gezeigt, wobei nicht zwischen einem Hoch- und Niederdruckkreis unterschieden wurde.

Vorteilhafte konstruktive Ausführungsformen der Wärmetauscher 13 bzw. 13.1 bis 13.4 (die etwas mehr Details zeigen) zwischen den Strangrollen 24 sind in Fig. 2 in einer geschnitten Seitenansicht dargestellt.

Die Wärmetauscher 13.1 können als Plattenwärmetauscher mit Bohrungen oder als Wärmetauscher 13.2 mit Kammern ausgeführt sein. Zum besseren Wärmeübergang können auch Rippen 28 in den Kammern vorgesehen sein. Wärmetauscher 13.3 mit Rohr-Steg-Rohr-Verbindungen und Wärmetauscher 13.4 als Rohrbündelwärmetaucher (hier mit Steifigkeit steigernden Laschen verbunden) können weitere konstruktive Ausführungsformen sein. Vorzugsweise sind auf der Rückseite des Wärmetauschers 13.1 bis 13.3 (auf der dem Strang abgewandten Seite) Wärmedämmungen angebracht. Die Wärmeisolierung bzw. Dämmkassette 29 besteht hier teilweise aus einer geschlossenen Blechummantelung mit einer Dämmstoffinnenfüllung. Der Dämmstoff ist gegenüber Wasser geschützt.

Die Wärmetauscher 33 neben dem Gießstrang 12 sind mit einer dickgestrichelten Linie angedeutet. Der Gießstrang 12 bewegt sich hier in Bewegungsrichtung 23. Die Wärmetauscherfläche zwischen den Strang- bzw. Segmenttrollen 24 kann beispielsweise ca. 50 bis 60 % der Abstrahlfläche in der Stranggießanlage annehmen. Durch spezielle Anordnung der Wärmetauscher 13.1 bis 13.4 sind die Strang- bzw. Segmentrollen 24 zum größten Teil gegenüber der Brammenwärme abgeschirmt, so dass sich hier eine geringere thermische Belastung der Segmentrollen ergibt.

Auch die Strangrollen 24 können die Funktion eines Wärmetauschers übernehmen. In Fig. 2 sind beispielsweise für das rechte Strangrollenpaar die dazu nötigen Bohrungen 35 in den Segmentrollen 24 dargestellt, durch die das Wasser bzw. Dampf fließt. Die obere Strangrolle 24 ist beispielsweise mit einer zentralen Kühlbohrung 35 und die untere Strangrolle 24 mit Revolver-Kühlbohrungen 35 gezeigt.

Um die Temperaturführung des Strangs flexibel abhängig vom Strangmaterial beeinflussen zu können, sind im Bereich der Wärmetauscher (z. B. 13.4) Strangaußenkühlungen in Form einer Sprühkühlung 25 vorgesehen. Hier wird das Wasser zwischen den Rohren hindurchgespritzt. Alternativ kann auch das Spritzwasser zwischen Strangrolle 24 und der Platte des Wärmetauschers 13.1 vorbei auf den Gießstrang 12 gespritzt werden (nicht dargestellt). Diese Kühleinrichtung 25 kann optional zugeschaltet werden, auch während des Dampferzeugungsprozesses. Bevorzugt wird jedoch der Gießstrang 12 trocken gekühlt.

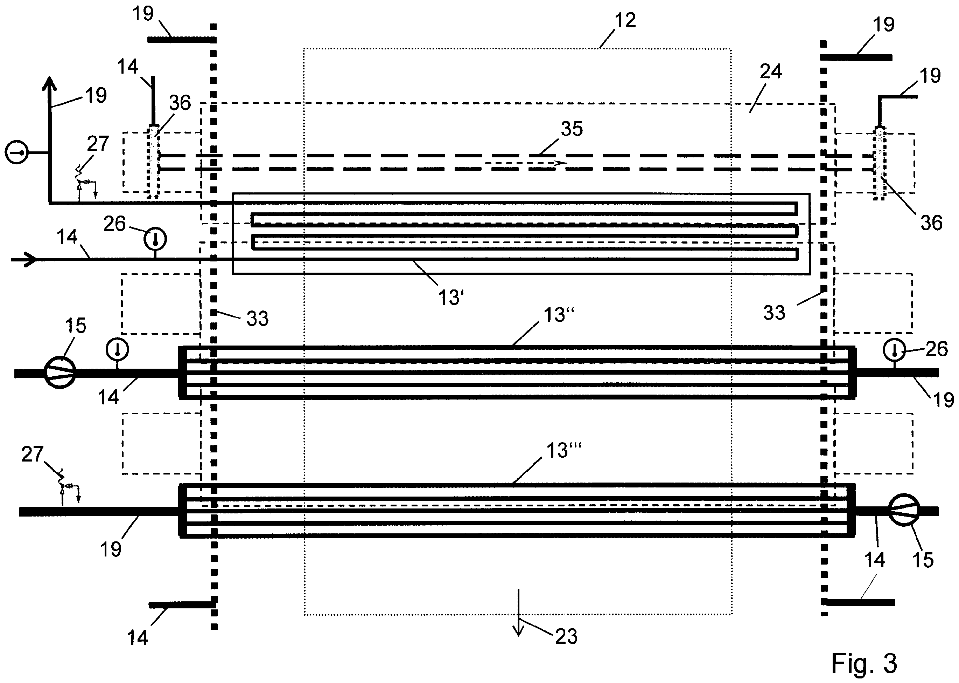

Figur 3 zeigt mögliche Ausführungsformen der Wärmetauscher 13' bis 13'" in der Vorderansicht in Blickrichtung der Segmentrollen 24, die nur schematisch eingezeichnet sind. Die seitlichen Befestigungen der Wärmetauscher sind nicht dargestellt. Die Wasser bzw. Dampfleitungen sind in der Ausführungsform eines Wärmetauscher 13' so ausgeführt, dass er schlangenförmig (mäanderförmig) durchlaufen wird. In den anderen Wärmetauscher-Ausführungsbeispielen 13" und 13'" durchläuft das Wasser bzw. der Dampf den Wärmetauscher von links nach rechts oder umgekehrt. Durch die Art der alternierenden Strömungsrichtung ist eine symmetrische Abkühlung des Strangs über der Breite gewährleistet.

Um die Wärme, die zur Seite entweicht, auch aufzufangen, können neben dem Gießstrang 12 im äußeren Bereich ebenfalls Wärmetauscher 33 angebracht sein, die mit den entsprechenden Zu- und Ableitungen 14, 19 verbunden sind.

Schematisch dargestellt ist auf Fig. 3 auch eine als Wärmetauscher ausgebildete Strangrolle 24. Über eine Hochdruck-Mediendrehzuführung 36 wird auf der Zulaufseite 14 das Wasser in die Strangrolle 24 geleitet. Beim Durchlaufen der heißen Strangrolle 24 verdampft das Wasser, um auf der anderen Seite wieder über eine Hochdruck-Mediendrehzuführung 36 als Dampf in die Nassdampfleitung 19 zu entweichen. Alternativ kann auch eine Ausführung der Mediendrehzuführung mit Zu- und Ablaufleitungen nur auf einer Seite eingesetzt werden. Um eine höhere Dampftemperatur zu erreichen, wird das Wasser bzw. der Dampf im Wechsel u. U. mehrmals von links nach rechts und umgekehrt durch eine Strangrolle 24 geführt.

Schematisch dargestellt sind die zulaufende Wasserleitung 14 und die Nassdampfleitung 19 sowie die Förderpumpen 15. Angedeutet werden hier auch die Temperaturmessgeräte 26 und die Druck-Sicherheitsventile 27. Statt oder zusätzlich zu den Sicherheitsventilen 27 können hier dicht bei den Wärmetauschern auch so genannte Berstscheiben angeordnet sein, um einen überhöhten Druckanstieg zu vermeiden und die Sicherheit der Anlage zu gewährleisten.

Die erfindungsgemäßen Wärmetauschereinheiten 13, 33 werden so ausgeführt, dass sie abschnittsweise leicht austauschbar sind, um deren Wartung und die Zugänglichkeit zu verbessern.

Die flexiblen Rohrleitungen zwischen der festen und beweglichen Seite eines Wärmetauscheranschlusses bzw. Gruppenanschlusses durch z. B. Hochdruck-Heißdampfschläuche oder Edelstahl-Ringwellenschläuche oder/und druckfeste Rohrgelenke oder Leitungsverbindungen mit Schnelllösekupplungen sind nicht dargestellt, aber gemäß einer Weiterbildung der Erfindung vorgesehen.

Insgesamt kann also gesagt werden, dass bei dem vorgeschlagenen Verfahren zur Energierückgewinnung in einer Stranggießanlage die bei der Abkühlung des Gießstrangs freiwerdende Wärmeenergie aufgefangen und genutzt wird, wobei vorgesehen ist, dass dem Gießstrang während des Gießens in Wärmetauschern 13, 33 zwischen den Strangrollen 24 und/oder neben dem Gießstrang 12 und/oder von den Strangrollen 24, die als Wärmetauscher ausgebildet sind, Wärme entzogen wird. Hierbei wird in diesem Transportzeitraum vom Gießstrang 12 ein großer Teil der Wärme mittels der Wärmetauscher 13, 33, 24 in Wasserdampf überführt und dieser aufgeheizt, welches dann zur Stromerzeugung genutzt und/oder zur direkten Nutzung der Prozesswärme oder/und des Dampfes bei anderen Wärme- oder/und Dampfverbrauchern vorgesehen wird.

Die Rohrleitungsführung oder/und die Strömungsrichtung durch die Wärmetauscher 13 verläuft bevorzugt so, dass eine symmetrische Abkühlung des Strangs 12 über seiner Breite gewährleistet ist, um die Qualität des herzustellenden Metallstrangs zu garantieren.

### Bezugszeichenliste

- 11: Stranggießanlage
- 12: Gießstrang
- 13: Wärmetauscher zwischen den Segmentrollen bzw. Strangrollen
- 13.1-13.4: Konstruktionsvarianten der Wärmetauscher zwischen den Rollen
- 13', 13", 13'": Verlauf der Wärmetauscherrohrleitungen zwischen den Rollen
- 14: Wasserleitung
- 15: Speisewasserpumpe
- 16: Speisewasserbehälter
- 17: Förderpumpe
- 18: Leitung mit zurückgeführtem Kondenswasser vom Dampfverbraucher oder/und Füllwasser
- 19: Sattdampf- bzw. Nassdampfleitung
- 20: Sammelbehälter, Dampfverteiler
- 21: Druckspeicher
- 22: Leitung zum Dampfverbraucher
- 23: Förderrichtung des Gießstrangs
- 24: Strangrollen (Segmentrollen)
- 25: Strangaußenkühlung, Sprühkühlung
- 26: Temperaturmessgerät
- 27: Sicherheitsventil
- 28: Rippe
- 29: Wärmeisolierung bzw. Dämmkassette
- 30: Wärmetauscher zur Erhöhung der Dampftemperatur
- 31: Zulaufleitung von einer anderen Wärmequelle
- 32: Rücklaufleitung zu einer anderen Wärmequelle
- 33: Wärmetauscher neben dem Gießstrang
- 34: Kondenswasserleitung
- 35: Kühlborhung in der Strangrolle
- 36: Hochdruck-Mediendrehzuführung

## Patentansprüche

1. Verfahren zur Rückgewinnung von Energie in einer Anlage zur Herstellung eines metallischen Guts, wobei die Anlage eine Stranggießanlage (11) umfasst, wobei im Bereich der Stranggießanlage (11) Wärme mittels mindestens eines Wärmetauschers (13, 33, 24) von dem metallischen Gut und/oder von einem Element der Stranggießanlage (11) in ein Wärmetransport- und/oder Arbeitsmedium, vorzugsweise Wasser bzw. Wasserdampf, überführt wird, wobei die in dem Wärmetransport- und/oder Arbeitsmedium enthaltene Wärmeenergie bzw. Dampfdruck in einer Dampfkraftmaschine, insbesondere in einer Dampfturbine, mit verbundenem Generator zur Stromerzeugung und/oder die Wärmeenergie des Wärmetransport- und/oder Arbeitsmedium zur anderweitigen Nutzung herangezogen wird, wobei die Stranggießanlage (11) eine Anzahl Stranggießrollen (24) aufweist, wobei der mindestens eine Wärmetauscher (13) zwischen zwei Stranggießrollen (24) angeordnet ist oder mindestens eine Stranggießrolle (24) als Wärmetauscher ausgebildet ist und dem Gießstrang (12) Wärme entzieht oder der mindestens eine Wärmetauscher (13, 33) in unmittelbarer Nähe des Gießstrangs (12), insbesondere neben dem Gießstrang (12), angeordnet ist und von diesem Wärme aufnimmt,
**dadurch gekennzeichnet, dass**
das Wärmetransport- und/oder Arbeitsmedium, insbesondere das Wasser oder der Dampf, nach dem Wärmetauscher (13, 33, 24) und vor seiner Verwendung weiter erwärmt wird, insbesondere in einem Überhitzer, in einem Dampfnachheizbrenner, in einem Flamm- oder Rauchkessel oder in einem weiteren Wärmetauscher (30), wobei eine weitere Erwärmung des Wärmetransport- und/oder Arbeitsmediums durch eine Thermoölheizung erfolgt und wobei das Thermoöl mittels Brennstoffen erwärmt wird, die Abfallprodukte des Stahlerzeugungsprozesses sind.

2. Verfahren nach Anspruch 1, **dadurch gekennzeichnet, dass** die Temperaturführung des Gießstrangs (12) mit einer Strangaußenkühlung, vorzugsweise in Form einer Sprühkühlung (25), erfolgt, wobei diese im Bereich des mindestens einen Wärmetauschers (13) angeordnet ist.

3. Verfahren nach Anspruch 1 oder 2, **dadurch gekennzeichnet, dass** der Volumenstrom des Wärmetransport- und/oder Arbeitsmediums, insbesondere des Wassers, in Abhängigkeit mindestens einer gemessenen Temperatur des Wärmetransport- und/oder Arbeitsmediums in den Zufluss- und/oder Abflussleitungen zu dem oder von dem mindestens einen Wärmetauscher (13, 33, 24) gesteuert oder geregelt wird, so dass eine definierte maximal zulässige Temperatur und/oder ein maximal zulässiger Druck des Wärmetransport- und/oder Arbeitsmediums, insbesondere des Dampfes, erreicht oder nicht überschritten wird.

4. Verfahren nach einem der Ansprüche 1 bis 3, **dadurch gekennzeichnet, dass** ein Prozessmodell für die Abkühlung des Gießstrangs (12) und zur Steuerung oder Regelung der Dampfgewinnung eingesetzt wird, wobei das Prozessmodell auch die Fördermenge des Wärmetransport- und/oder Arbeitsmediums, insbesondere des Wassers, und/oder die Einstellung mindestens eines Misch- und Regelventils und/oder die Temperatur und/oder den Druck des Wärmetransport- und/oder Arbeitsmediums umfasst.

5. Verfahren nach einem der Ansprüche 1 bis 4, **dadurch gekennzeichnet, dass** der Dampf und/oder die Wärme aus dem mindestens einen Wärmetauscher (13, 33, 24) unmittelbar oder nach weiterer Erhitzung mittels einer Zusatzheizung (30) zur Stromerzeugung mittels eines thermodynamischen Kreisprozesses genutzt wird, insbesondere in einer Dampfturbine, in einem Dampfschraubenmotor, in einer ORC-Anlage oder in einer Kalina-Anlage, oder alternativ **dadurch gekennzeichnet, dass** Dampf und/oder Wärme aus dem mindestens einen Wärmetauscher (13, 33, 24) unmittelbar oder nach weiterer Erhitzung mittels einer Zusatzheizung (30) zur Nutzung in einem Dampfnetz, zur Speicherung von Wärme in einem transportablen oder ortsfesten Wärmespeicher, zur Nutzung in einer Metall verarbeitenden Anlage, insbesondere in einer Beiz- oder andere Bandweiterverarbeitungsanlagen oder in einem Stahlwerk, zur Nutzung in einer Meerwasserentsalzungsanlage, zur Nutzung in einem chemischen Prozess, zum Betreiben einer Dampfpumpe, zu Trocknungsprozessen, zur Wasseraufbereitung oder zur Nutzung in Fernwärme-Gebäudeheizungen verwendet wird.

6. Verfahren nach einem der Ansprüche 1 bis 5, **dadurch gekennzeichnet, dass** das Wärmetransport- und/oder Arbeitsmedium, insbesondere das Wasser oder der Dampf, in einem weiteren Wärmetauscher (30) dadurch weiter erwärmt wird, dass der Wärmetauscher (30) mit einer Wärmetransportleitung (31, 32) verbunden wird, die mit einem weiteren heißen Wärmeübertragungsmedium, insbesondere mit Luft, mit Rauchgas, mit Thermoöl oder mit einer Salzschmelze, von einer weiteren Wärmequelle, gegebenenfalls über weitere Wärmetauscher, gespeist wird, die eine höhere Temperatur hat, als das weiter zu erwärmende Wärmetransport- und/oder Arbeitsmedium, besonders bevorzugt die weitere Wärme zur Erwärmung des weiteren Wärmeübertragungsmediums von einem Brammen- oder Coillager, von einem Brammenrollgang, von einem Ofen oder von Teilbereichen einer Stranggießanlage stammt.

7. Verfahren nach einem der Ansprüche 1 bis 6, **dadurch gekennzeichnet, dass** als Brennstoff zum Betreiben der Thermoölheizung Hochofengas, Koksgas, Konvertergas, eine Mischung dieser Gase, Erdgas oder Erdöl verwendet wird.

## Claims

1. Method for recovery of energy in a plant for producing a metallic material, wherein the plant comprises a continuous casting plant (11), wherein in the region of the continuous casting plant (11) heat is transferred by means of at least one heat exchanger (13, 33, 24) from the metallic material and/or from an element of the continuous casting plant (11) to a heat transporting and/or working medium, preferably water or water steam, wherein the thermal energy or steam pressure present in the heat transporting and/or working medium is utilised in a steam power plant, particularly in a steam turbine, with a connected generator for power generation and/or the thermal energy of the heat transporting and/or working medium is or are utilised for another use, wherein the continuous casting plant (11) comprises a plurality of continuous casting rollers (24), wherein the at least one heat exchanger (13) is arranged between two continuous casting rollers (24) or at least one continuous casting roller (24) is constructed as a heat exchanger and heat is extracted from the cast strip (12) or the at least one heat exchanger (13, 334) is arranged in the immediate vicinity of the cast strip (12), particularly near the cast strip (12) and takes up heat therefrom,
**characterised in that**
the heat transporting and/or working medium, particularly the water or the steam, is reheated after the heat exchanger (13, 33, 24) and before its use, particularly in a superheater, in a steam afterburner, in a flame boiler or fume boiler or in a further heat exchanger (30), wherein reheating of the heat transporting and/or working medium is carried out by thermo-oil heating and wherein the thermo-oil is heated by means of fuels which are waste products of the steel production process.

2. Method according to claim 1, **characterised in that** the temperature control of the cast strip (12) is carried out by strip external cooling means, preferably in the form of spray cooling means (25), wherein this is arranged in the region of the at least one heat exchanger (13).

3. Method according to claim 1 or 2, **characterised in that** the volume flow of the heat transporting and working medium, particularly the water, is controlled or regulated in dependence on at least one measured temperature of the transporting and/or working medium in the inflow and/or outflow lines to or from the at least one heat exchanger (13, 33, 24) so that a defined maximum permissible temperature and/or a maximum permissible pressure of the heat transporting and/or working medium, particularly the steam, is reached or not exceeded.

4. Method according to any one of claims 1 to 3, **characterised in that** a process model for cooling of the cast strip (12) and for controlling or regulating the steam recovery is used, wherein the process model also includes the conveyed quantity of the heat transporting and/or working medium, particularly the water, and/or the setting of at least one mixing and regulating valve and/or the temperature and/or the pressure of the heat transporting and/or working medium.

5. Method according to any one of claims 1 to 4, **characterised in that** the steam and/or the heat from the at least one heat exchanger (13, 33, 24) is or are used directly or after further heating by means of an auxiliary heating means (30) for power generation by means of a thermodynamic circuit process, particularly in a steam turbine, in a steam screw motor, in an ORC plant or in a Kalina plant, or alternatively **characterised in that** steam and/or heat from the at least one heat exchanger (13, 33, 24) is or are employed directly or after further heating by means of auxiliary heating means (30) for use in a steam network, for storage of heat in a transportable or fixed heat store, for use in a metal processing plant, particularly in a pickling or other strip processing plants or in a steel mill, for use in a seawater desalination plant, for use in a chemical process, for operating a steam pump, for drying processes, for water preparation or for use in district-heat heating systems for buildings.

6. Method according to any one of claims 1 to 5, **characterised in that** the heat transporting and/or working medium, particularly the water or the steam, is reheated in a further heat exchanger (30) **in that** the heat exchanger (30) is connected with a heat transport line (31, 32) which is supplied with a further hot heat transfer medium, particularly with air, flue gas, thermo-oil or a molten salt bath, from a further heat source, optionally by way of further heat exchangers, which has a higher temperature than the heat transporting and/or working medium to be reheated, wherein with particular preference the further heat for heating the further heat transmission medium originates from a slab or coil store, from a slab roller path, from a furnace or from sub-regions of a continuous casting plant.

7. Method according to any one of claims 1 to 6, **characterised in that** blast furnace gas, coal gas, converter gas, a mixture of these gases, natural gas or crude oil is used as fuel for operating the thermo-oil heating means.

## Revendications

1. Procédé pour la récupération d'énergie dans une installation destinée à la fabrication d'un produit métallique ; dans lequel l'installation comprend une installation de coulée continue (11) ; dans lequel, dans la zone de l'installation de coulée continue (11), de la chaleur au moyen d'au moins un échangeur de chaleur (13, 33, 24) est transférée depuis le produit métallique et/ou depuis un élément de l'installation de coulée continue (11) à un milieu de traitement et/ou de transport de chaleur, de préférence de l'eau, respectivement de la vapeur d'eau ; dans lequel l'énergie thermique, respectivement la pression de vapeur que contient le milieu de traitement et/ou de transport de chaleur est utilisée dans une dans une machine à vapeur, en particulier dans une turbine à vapeur, à laquelle est reliée une génératrice pour la production d'énergie électrique et/ou à l'énergie thermique du milieu de traitement et/ou de transport de chaleur destinée à des fins d'exploitation d'un autre type ; dans lequel l'installation de coulée continue (11) présente un certain nombre de cylindres de coulée continue (24) ; dans lequel ledit au moins un échangeur de chaleur (13) est disposé entre deux cylindres de coulée continue (24) ou au moins un cylindre de coulée continue (24) est réalisé sous la forme d'un échangeur de chaleur et extrait de la chaleur à partir de la barre de coulée continue (12) ou bien ledit au moins un échangeur de chaleur (13, 33) est disposé à proximité immédiate de la barre de coulée continue (12), en particulier à côté de la barre de coulée continue (12) et absorbe de la chaleur à partir de cette dernière ; **caractérisé en ce que** le milieu de traitement et/ou de transport de chaleur, en particulier l'eau ou la vapeur, est soumis à un réchauffement ultérieur, après l'échangeur de chaleur (13, 33, 24) ou avant son utilisation, en particulier dans un surchauffeur, dans un brûleur de chauffage ultérieur de la vapeur, dans une chaudière du type à flamme ou à fumée ou dans un échangeur de chaleur supplémentaire (30) ; dans lequel un réchauffement ultérieur du milieu de traitement et/ou de transport de chaleur a lieu via un chauffage du type à huile thermique ; et dans lequel l'huile thermique est réchauffée au moyen de combustibles qui représentent des sous-produits du processus de production sidérurgique.

2. Procédé selon la revendication 1, **caractérisé en ce que** le guidage de la température de la barre de coulée continue (12) a lieu avec un refroidissement externe de la barre, de préférence sous la forme d'un refroidissement par pulvérisation (25) ; dans lequel ce dernier est disposé dans la zone dudit au moins un échangeur de chaleur (13).

3. Procédé selon la revendication 1 ou 2, **caractérisé en ce que** le courant volumique du milieu de traitement et/ou de transport de chaleur, en particulier de l'eau, est commandé ou réglé en fonction d'au moins une température mesurée du milieu de traitement et/ou de transport de chaleur dans les conduits d'entrée et/ou de sortie menant audit au moins un échangeur de chaleur (13, 33, 24) ou provenant de ce dernier, d'une manière telle que l'on atteint ou que l'on ne dépasse pas vers le haut une température maximale admise définie et/ou une pression maximale admise du milieu de traitement et/ou de transport de chaleur, en particulier de la vapeur.

4. Procédé selon l'une quelconque des revendications 1 à 3, **caractérisé en ce que** l'on met en oeuvre un modèle de traitement pour le refroidissement de la barre de coulée continue (12) et pour la commande ou le réglage de la récupération de vapeur ; dans lequel le modèle de traitement comprend également la quantité de transport du milieu de traitement et/ou de transport de chaleur, en particulier de l'eau, et/ou le réglage d'au moins une soupape de mélange et de commande et/ou la température et/ou la pression du milieu de traitement et/ou de transport de chaleur.

5. Procédé selon l'une quelconque des revendications 1 à 4, **caractérisé en ce que** la vapeur et/ou la chaleur issue dudit au moins un échangeur de chaleur (13, 33, 24) est utilisée directement ou après un réchauffement ultérieur au moyen d'un chauffage d'appoint (30) pour la production d'énergie électrique au moyen d'un cycle thermodynamique, en particulier dans une turbine à vapeur, dans un moteur hélicoïdal à vapeur, dans une installation ORC ou dans une installation Kalina, ou en variante **caractérisé en ce que** la vapeur et/ou la chaleur la chaleur issue dudit au moins un échangeur de chaleur (13, 33, 24) est utilisée directement ou après un réchauffement ultérieur au moyen d'un chauffage d'appoint (30) pour son exploitation dans un réseau de vapeur, pour le stockage de chaleur dans un accumulateur de chaleur transportable ou fixe, pour son exploitation dans une installation de traitement du métal, en particulier dans des installations de décapage au de traitement ultérieur de bandes ou dans une aciérie, pour son exploitation dans une installation de dessalement de l'eau de mer, pour son exploitation dans un processus chimique, pour l'entraînement d'une pompe à vapeur, pour des processus de séchage, pour le traitement de l'eau ou pour son exploitation dans des chauffages urbains-d'immeubles.

6. Procédé selon l'une quelconque des revendications 1 à 5, **caractérisé en ce que** le milieu de traitement et/ou de transport de chaleur, en particulier l'eau ou la vapeur, sont soumis à un réchauffement ultérieur dans un échangeur de chaleur supplémentaire (30) par le fait de relier l'échangeur de chaleur (30) à une canalisation de transport de chaleur (31, 32) qui est alimentée avec un milieu de transfert de chaleur chaud supplémentaire, en particulier avec de l'air, avec un gaz de fumée, avec de l'huile thermique ou avec du sel fondu, à partir d'une source de chaleur supplémentaire, le cas échéant via des échangeurs de chaleur supplémentaires, qui possède une température supérieure à celle du milieu de traitement et/ou de transport de chaleur qui doit être soumis à un réchauffement ultérieur ; de manière particulièrement préférée, la chaleur supplémentaire pour le réchauffement du milieu de transfert de chaleur supplémentaire provient d'un parc à brames ou à bobines, d'un train de rouleaux de brames, d'un four ou de zones partielles d'une installation de coulée continue.

7. Procédé selon l'une quelconque des revendications 1 à 6, **caractérisé en ce qu'**on utilise, à titre de combustible pour l'exploitation du chauffage du type à huile thermique, du gaz de hauts-fourneaux, du gaz de cokerie, du gaz de convertisseur, un mélange de ces gaz, du gaz naturel ou des hydrocarbures.
